# EUROPÄISCHE PATENTANMELDUNG

(11) **EP 0 563 909 A1**
(43) Veröffentlichungstag der Anmeldung: **06.10.1993**
(21) Anmeldenummer: 93105301.1
(22) Anmeldetag: 30.03.1993
(51) Int. Cl.: B60V 1/22

(54) **Bodeneffekt-Fahrzeug**

(30) Priorität: 31.03.1992 DE 4210584
(71) Anmelder: Blum, Klaus, CH-9400 Rorschacherberg (CH)
(72) Erfinder: Blum, Albert, CH-2072 St. Blaise (CH)
(74) Vertreter: Stachow, Ernst-Walther, Prof. Dr.

(57) **Zusammenfassung**

Die Erfindung betrifft ein schwimmfähiges Bodeneffekt-Fahrzeug mit mindestens einer beidseitig an dessen Rumpf vorgesehenen Tragflächenanordnung, bestehend aus je einem Tragflächenpaar, vor dem jeweils ein Schuberzeuger (4) angeordnet sein kann, einer an der Hinterkante jeder Tragfläche (2) schwenkbar angelenkten Auftriebs- bzw. Umlenkklappe (7) sowie den Schuberzeugern (4) zugeordneten und unter die Tragflächen (2) gerichteten bzw. richtbaren Luftströmungskanälen.

Durch die Erfindung sollen die Schuberzeuger zuverlässig vor Spritzwasser geschützt werden.

Die Erfindung ist dadurch gekennzeichnet, daß die Tragflächen (2) an der Oberseite des Rumpfes (1) befestigt sind und daß hinter jeder Tragfläche (2) eine Zusatztragfläche (8) angeordnet ist, die unterhalb der Ebene der Tragflächen (2) liegt.

## Beschreibung

Die Erfindung betrifft ein Bodeneffekt-Fahrzeug, vorzugsweise mit einem schwimmfähigen Rumpf und/oder Schwimmern, mit einer oder mehreren im Abstand hintereinander beidseitig am Rumpf angeordneten Tragflächenanordnungen, bestehend aus je einem Tragflächenpaar, vor dem jeweils ein oder mehrere Schuberzeuger angeordnet sein können, einer an der Hinterkante jeder Tragfläche schwenkbar angelenkten Umlenkklappe sowie den Schuberzeugern zugeordneten, unter die Tragflächen gerichteten bzw. richtbaren Luftströmungskanälen, durch die Luft unter die Tragflächen geleitet werden kann.

Bekannte Bodeneffekt-Fahrzeuge besitzen in der Regel einen schwimmfähigen Rumpf oder zusätzliche Schwimmer. Der erforderliche Bodeneffekt wird durch seitlich am Rumpf angeordnete Tragflächen in Verbindung mit einem oder mehreren Schuberzeugern bewirkt.

Ferner ist ein Bodeneffekt-Fahrzeug bekannt, welches einen langgestreckten Rumpf aufweist und bei dem mehrere Tragflächenpaare Im Abstand hintereinander etwa mittig am Rumpf angeordnet sind. Die Hinterkanten dieser Tragflächen reichen im Schwimmzustand des Bodeneffekt-Fahrzeuges bis in die Nähe der Wasserlinie, so daß bei einer Anströmung der Tragflächen von vorn ein Luftstau unter denselben entsteht, der ein Abheben des Bodeneffekt-Fahrzeuges von der Wasser- bzw. Bodenoberfläche zur Folge hat. Die Anströmung der Tragflächen wird durch die Schuberzeuger bewirkt, die vor der Flügelnase der Tragflächen angeordnet sind. Die Anströmung der Unterseite der Tragflächen wird zusätzlich dadurch verstärkt, daß den Schuberzeugern ein unter die Tragflächen gerichteter oder richtbarer Luftströmungskanal nachgeordnet ist.

Zum seitlichen Abschluß des Hohlraumes unter den Tragflächen sind diese zusätzlich an deren freien Enden mit einer die Tragflächen verbindenden Schwimmeranordnung versehen. Diese Schwimmeranordnung dient gleichzeitig zur Stabilisierung des Bodeneffekt-Fahrzeuges im Schwimmzustand bzw. während der Wasserfahrt oder beim Start- und Landevorgang.

Nachteilig bei diesem Bodeneffekt-Fahrzeug ist die niedrige Anordnung der mit den Schuberzeugern versehenen Tragflächen, die zur Erzeugung des Bodeneffektes erforderlich ist, denn daraus resultiert die Gefahr, daß die Schuberzeuger das in der Start- und Landephase nicht zu vermeidende Spritzwasser ansaugen. Das in die Schuberzeuger eingesaugte Spritzwasser kann zu Betriebsstörungen oder zum vollständigen Ausfall der Schuberzeuger führen.

Der Erfindung liegt deshalb die Aufgabe zugrunde, ein schwimmfähiges Bodeneffekt-Fahrzeug zu schaffen, bei dem die Schuberzeuger zuverlässig vor Spritzwasser geschützt sind.

Erfindungsgemäß wird diese Aufgabe dadurch gelöst, daß die Tragflächen mit den vor diesen angeordneten Schuberzeugern in Höhe des oberen Bereichs des Rumpfes oder höher angeordnet sind und daß hinter jeder Tragfläche eine Zusatztragfläche vorgesehen ist, die unterhalb der Ebene der jeweiligen Tragfläche seitlich am Rumpf angeordnet ist.

Durch die damit mögliche hohe Anordnung der Schuberzeuger befinden sich die Schuberzeuger weit außerhalb des Spritzbereiches des Wassers und sind somit zuverlässig vor Wassereintritt geschützt. Die tieferliegenden Zusatztragflächen, an denen keine Schuberzeuer vorgesehen sind, können sich bis nahe an die Wasserlinie erstrecken, wo sie besonders wirksam sind. Außerdem wird durch die neue Konstruktion die Manövrierfähigkeit verbessert und der Bodeneffekt insbesondere in der Start- und Landephase erhöht.

Vorzugsweise sind die mit den Schuberzeugern versehenen Tragflächen an der Oberseite des Rumpfes befestigt, wo die Schuberzeuger ausreichend weit von der Wasseroberfläche entfernt sind.

Ein zusätzlicher Schutz vor Spritzwasser wird dadurch erreicht, daß auch vor jeder Tragfläche eine tieferliegende Zusatztragfläche angeordnet ist, wobei die hintere Zusatztragfläche der einen oberen Tragfläche die vordere Zusatztragfläche der folgenden oberen Tragfläche sein könnnen.

Die Erfindung ist weiterhin dadurch gekennzeichnet, daß die jeweils hinter einer Tragfläche befindliche Zusatztragfläche um eine im wesentlichen horizontale Achse verschwenkbar ausgeführt sein kann. Dadurch wird beim vertikalen Anstellen der Zusatztragflächen eine scheinbare Verlängerung der oberen Tragflächen erreicht und somit der Luftstau unter den Tragflächen erheblich verstärkt.

Bei einer besonders zweckmäßigen Ausbildung der Erfindung entsteht durch das Zusammenspiel der verschwenkbaren unteren Zusatztragflächen gemeinsam mit der Einstellung der Auftriebs- bzw. Umlenkklappe der oberen Tragfläche durch die Art und Weise der Strömungsführung der Luft zusätzlich der sogenannte Fowlereffekt. Dadurch werden optimale Auftriebswerte erreicht, die im Bodeneffektbereich hervorragende Sport- und Landeeigenschaften ergeben, die sich besonders positiv auswirken durch extrem günstiges Langsamflugverhalten.

In Fortführung der Erfindung können die Zusatztragflächen die an den oberen Tragflächen sitzenden Schuberzeuger seitlich überdecken und erstrecken sich bis unter den nächsten Schuberzeuger der jeweils nächsten Tragfläche. Dadurch wird ein besonders guter Schutz vor Spritzwasser erreicht.

In Fortbildung der Erfindung weisen die verstellbaren Zusatztragflächen die gleiche seitliche Länge auf wie die oberen Tragflächen.

Zur Erhöhung der mechanischen Belastbarkeit sind die freien Enden der oberen Tragflächen und/oder die freien Enden der verstellbaren unteren Zusatztragflächen miteinander verbunden.

In einer weiteren Ausgestaltung der Erfindung sind die oberen Tragflächen und/oder die Zusatztragflächen einer Seite durch ein sich parallel zum Rumpf erstreckendes plattenförmiges Element miteinander verbunden, welches zweckmäßigerweise als Schwimmer ausgebildet ist.

Eine besonders vorteilhafte Ausgestaltung der Erfindung ist dadurch gekennzeichnet, daß sich im Rumpf eine langgestreckte Fahrgastzelle befindet, wobei der Rumpf derart mit einer Mehrzahl von hintereinander angeordneten Tragflächenpaaren versehen ist, daß deren Anordnung der eines Schulterdeckers entspricht, daß die Zwischenräume zwischen den oberen Tragflächen durch vertikal verschwenkbare Zusatztragflächen überdeckt werden, daß hinter der letzten oberen Tragfläche eine weitere verstellbare Zusatztragfläche angeordnet ist und daß die freien Enden der Tragflächen und die freien Enden der verstellbaren Zusatztragflächen jeweils einer Fahrzeugseite durch einen Schwimmer miteinander verbunden sind.

In Fortführung der Erfindung kann jede obere Tragfläche mit mindestens einem vor deren Flügelnase befindlichen Schuberzeuger versehen sein. Damit wird eine gleichmäßige Verteilung des Luftstaus unter den Tragflächen über die gesamte Fahrzeuglänge erreicht.

In Fortführung der Erfindung ist die Oberseite wenigstens einer unteren Zusatztragfläche als Laufsteg zwischen der Fahrgastzelle und einem Anleger ausgebildet. Dadurch wird ein besonders bequemes Betreten der Fahrgastzelle des Bodeneffekt-Fahrzeuges erreicht.

Die Erfindung wird nachfolgend an einem Ausführungsbeispiel näher erläutert. In der zugehörigen Zeichnung zeigen
- Figur 1: eine Seitenansicht des Bodeneffekt-Fahrzeuges und
- Figur 2: die Draufsicht auf das Bodeneffekt-Fahrzeug nach Figur 1.

Gemäß der Zeichnung besteht das schwimmfähige Bodeneffekt-Fahrzeug aus einem langgestreckten schwimmfähigen Rumpf 1 mit einer in diesem angeordneten Fahrgastzelle und seitlich am Rumpf 1 angeordneten Tragflächen 2. Die Tragflächen 2 sind paarweise angeordnet, wobei im dargestellten Beispiel drei Tragflächenpaare 2 am Rumpf 1 befestigt sind. Die Anzahl der hintereinander angeordneten Tragflächenpaare 2 ist von der Länge des Rumpfes 1 abhängig.

Jede der Tragflächen 2 ist mit einem vor der jeweiligen Flügelnase 3 montierten Schuberzeuger 4 versehen, wobei dem Schuberzeuger 4 ein unter die Tragfläche 2 gerichteter bzw. richtbarer Luftströmungskanal 5 zugeordnet ist, mit dessen Hilfe die durch den Schuberzeuger 4 durch den jeweiligen Einlaufdiffusor 6 angesaugte und beschleunigte Luft unter die Tragfläche 2 geleitet werden kann.

Die Tragflächen 2 sind an der Oberseite des Rumpfes 1 befestigt, so daß deren Anordnung der Flügelanordnung eines Schulterdeckers entspricht. Dadurch wird erreicht, daß sich die Schuberzeuger 4 bereits weitgehend außerhalb des Spritzbereiches des Wassers beim Start- oder Landevorgang befinden. An der Hinterkante der Tragflächen 2 ist eine schwenkbare Auftriebs- bzw. Umlenkklappe 7 zur Auftriebserhöhung während der Start- und Landephase angeordnet.

Zur Erzeugung eines ausreichenden Luftstaues mit der unter die Tragflächen 2 geleiteten Luft sind hinter jeder Tragfläche 2 tiefergesetzte und um ihre horizontale Achse schwenkbare Zusatztragflächen 8 am Rumpf 1 befestigt.

Die Breite dieser Zusatztragflächen 8 ist dabei so gewählt, daß sie zumindest in der horizontalen Stellung bis zum jeweils nächsten Schuberzeuger 4 oder unter diesen reichen. Die Zusatztraglächen 8 sollten außerdem mindestens so lang sein, daß diese die Schuberzeuger 4 seitlich überdecken.

Da die Zusatztragflächen 8 und die Klappen 7 gemeinsam mit einem zwischen beiden befindlichen Luftspalt 9 und dadurch einen Fowlereffekt bewirken, ist es zweckmäßig, daß die Zusatztragflächen 8, die oberen Tragflächen 2 und die Klappe 7 gleich lang ausgeführt sind.

In der Start- und in der Landephase sind sowohl die Klappen 7 als auch die Zusatztragflächen 8 angestellt und bilden gemeinsam einen den Luftstau bewirkenden Hohlraum unter den Tragflächen 2. Dieser Luftstau verstärkt gemeinsam mit der Fowlereffekt den Bodeneffekt während der Start- und Landephase.

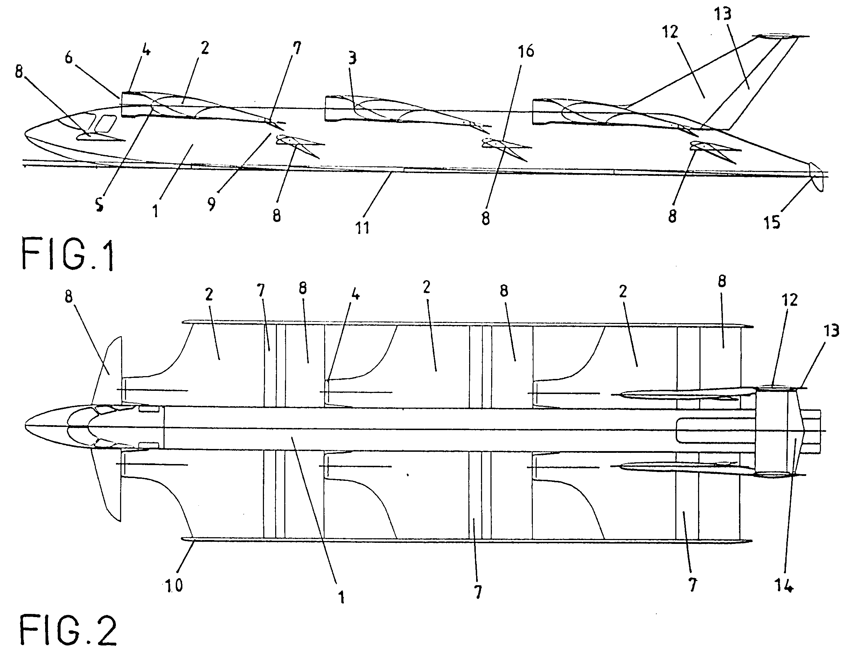

Seitlich begrenzt wird dieser Hohlraum, wie aus Figur 2 ersichtlich, durch einen an den freien Enden der Tragflächen 2 und der Zusatztragflächen 8 befestigten flachen Schwimmer 10, der zusätzlich eine Stabilisierung des Rumpfes 1 beim Schwimmen auf der Wasserlinie 11 bewirkt.

Weiterhin kann vor der ersten Tragfläche 2 in der gleichen Ebene wie die verstellbaren Zusatztragflächen 8 eine weitere Zusatztragfläche 8 starr mit dem Rumpf 1 verbunden sein. Die Hinterkante dieser Zusatztragfläche 8 ragt bis unter den ersten Schuberzeuger 4.

Für die Steuerung des Bodeneffekt-Fahrzeuges im abgehobenen Zustand, also in der Flugphase, befinden sich am Heck des Rumpfes 1 ein oder zwei Seitenleitwerke 12, die mit je einem Seitenruder 13 versehen sind und ein Höhenruder 14. Die Steuerung des Bodeneffekt-Fahrzeuges im Wasser erfolgt auf übliche Weise mittels eines in das Wasser eintauchenden Ruders 15.

Durch die Anordnung der Tragflächen 2 im oberen Bereich des Rumpfes 1 und die zusätzlichen unteren Tragflächen 8 vor bzw. hinter jeder oberen Tragfläche 2 wird weiterhin ausgeschlossen, daß die Schuberzeuger 4 während der Start- und Landephase Spritzwasser ansaugen können.

Das vorstehend beschriebene Bodeneffekt-Fahrzeug zeichnete sich damit durch besonders gute Eigenschaften sowohl in der Start- und Landephase, als auch in der Flugphase unter Ausnutzung des Bodeneffektes aus.

Die Anordnung der unteren Zusatztragflächen 8 bietet weiterhin die Möglichkeit, deren Oberseite als Laufstege 16 auszubilden, so daß ein besonders bequemes Betreten der im Rumpf 1 befindlichen Fahrgastzelle ermöglicht wird.

### Bezugszeichenliste

- 1: Rumpf
- 2: Tragflächen
- 3: Flügelnase
- 4: Schuberzeuger
- 5: Luftströmungskanal
- 6: Einlaufdiffusor
- 7: Auftriebs- bzw. Umlenkklappe
- 8: Zusatztragflächen
- 9: Luftspalt
- 10: Schwimmer
- 11: Wasserlinie
- 12: Seitenleitwerk
- 13: Seitenruder
- 14: Höhenruder
- 15: Ruder
- 16: Laufsteg

## Patentansprüche

1. Bodeneffekt-Fahrzeug, vorzugsweise mit einem schwimmfähigen Rumpf und/oder Schwimmern, mit einer oder mehreren im Abstand hintereinander beidseitig am Rumpf vorgesehenen Tragflächenanordnungen, bestehend aus je einem Tragflächenpaar, vor dem jeweils ein oder mehrere Schuberzeuger angeordnet sein können, einer an der Hinterkante jeder Tragfläche schwenkbar angelenkten Auftriebs- bzw. Umlenkklappe sowie den Schuberzeugern zugeordneten, unter die Tragflächen gerichteten bzw. richtbaren Luftströmungskanälen, durch die Luft unter die Tragflächen geleitet werden kann, **dadurch gekennzeichnet,** daß die Tragflächen (2) mit den vor diesen angeordneten Schuberzeugern (4) in Höhe des oberen Bereichs des Rumpfes (1) oder höher angeordnet sind und daß hinter jeder Tragfläche (2) eine Zusatztragfläche (8) vorgesehen ist, die unterhalb der Ebene der jeweiligen Tragfläche (2) seitlich am Rumpf (1) angeordnet ist.

2. Bodeneffekt-Fahrzeug nach Anspruch 1, **dadurch gekennzeichnet,** daß die Tragflächen (2) an der Oberseite des Rumpfes (1) befestigt sind.

3. Bodeneffekt-Fahrzeug nach Anspruch 1 oder 2, **dadurch gekennzeichnet,** daß sowohl vor als auch hinter jeder oberen Tragfläche (2) eine tieferliegende Zusatztragfläche (8) vorgesehen ist.

4. Bodeneffekt-Fahrzeug nach einem der Ansprüche 1 bis 3, **dadurch gekennzeichnet,** daß die jeweils hinter einer oberen Tragfläche (2) befindliche Zusatztragfläche (8) um eine im wesentlichen horizontale Achse verschwenkbar ist.

5. Bodeneffekt-Fahrzeug nach einem der Ansprüche 1 bis 4, **dadurch gekennzeichnet,** daß die verschwenkbaren Zusatztragflächen (8) gemeinsam mit der Auftriebs- bzw. Umlenkklappe (7) der jeweiligen oberen Tragfläche (2) eine mit einem Luftspalt (9) versehene Anordnung bilden, durch die ein Fowlereffekt wirksam wird.

6. Bodeneffekt-Fahrzeug nach einem der Ansprüche 1 bis 5, **dadurch gekennzeichnet,** daß die Zusatztragflächen (8) die Schuberzeuger (4) in seitlicher Richtung überragen.

7. Bodeneffekt-Fahrzeug nach einem der Ansprüche 1 bis 6, **dadurch gekennzeichnet,** daß sich die Zusatztragflächen (8) bis unter den Schuberzeuger (4) der jeweiligen folgenden oberen Tragfläche (8) erstrecken.

8. Bodeneffekt-Fahrzeug nach einem der Ansprüche 1 bis 7, **dadurch gekennzeichnet,** daß die verstellbaren Zusatztragflächen (8) die gleiche Länge aufweisen wie die oberen Tragflächen (2).

9. Bodeneffekt-Fahrzeug nach einem der Ansprüche 1 bis 8, **dadurch gekennzeichnet,** daß die freien Enden der oberen Tragflächen (2) und/oder die freien Enden der verstellbaren Zusatztragflächen (8) miteinander verbunden sind.

10. Bodeneffekt-Fahrzeug nach Anspruch 9, **dadurch gekennzeichnet,** daß die oberen Tragflächen (2) und/oder die Zusatztragflächen (8) einer Seite durch ein sich parallel zum Rumpf (1) erstreckendes plattenförmiges Element miteinander verbunden sind.

11. Bodeneffekt-Fahrzeug nach Anspruch 10, **dadurch gekennzeichnet,** daß das plattenförmige Element als Schwimmer (10) ausgebildet ist.

12. Bodeneffekt-Fahrzeug nach Anspruch 1, **dadurch gekennzeichnet,** daß sich im Rumpf (1) eine langgestreckte Fahrgastzelle befindet, wobei der Rumpf (1) derart mit einer Mehrzahl von hintereinander angeordneten oberen Tragflächenpaaren (2) versehen ist, daß deren Anordnung der eines Schulterdeckers entspricht, daß die Zwischenräume zwischen den Tragflächen (2) durch vertikal verschwenkbare Zusatztragflächen (8) überdeckt werden, daß hinter der letzten oberen Tragfläche (2) eine weitere verstellbare Zusatztragfläche (8) angeordnet ist und daß die freien Enden der oberen Tragflächen (2) und die freien Enden der verstellbaren Zusatztragflächen (8) jeweils einer Fahrzeugseite durch einen Schwimmer (10) miteinander verbunden sind.

13. Bodeneffekt-Fahrzeug nach Anspruch 12, **dadurch gekennzeichnet,** daß jede obere Tragfläche (2) mit mindestens einem vor deren Flügelnase (3) befindlichen Schuberzeuger (4) versehen ist.

14. Bodeneffekt-Fahrzeug nach den Ansprüchen 1 bis 13, **dadurch gekennzeichnet,** daß die Oberseite wenigstens einer Zusatztragfläche (8) als Laufsteg (16) zwischen der Fahrgastzelle und einem Anleger ausgebildet ist.
